# EUROPÄISCHE PATENTANMELDUNG

(11) **EP 3 146 843 A1**
(43) Veröffentlichungstag der Anmeldung: **29.03.2017**
(21) Anmeldenummer: 16160750.2
(22) Anmeldetag: 16.03.2016
(51) Int. Cl.: A21C 5/00

(54) **TRENNEINRICHTUNG ZUR AUFTRENNUNG EINES TEIGSTRANGS IN EINZELNE TEIGSTRANGELEMENTE**

(30) Priorität: 10.09.2015 DE 102015115302
(71) Anmelder: Fritsch GmbH, 97348 Markt Einersheim (DE)
(72) Erfinder: Bernhardt, Udo, 97346 Iphofen (DE)
(74) Vertreter: Hafner & Kohl

(57) **Zusammenfassung**

Die Erfindung betrifft eine Trenneinrichtung (1) zur Auftrennung wenigstens eines, insbesondere bandförmigen, Teigstrangs (4) in einzelne Teigstrangelemente (4'), umfassend wenigstens ein Trennelement (5) mit wenigstens einem, insbesondere schneidenförmigen, Trennabschnitt (6), sowie wenigstens ein Strukturelement (7), welches zur gezielten Beeinflussung des elastisch-federnden Verhaltens, insbesondere des elastisch-federnden Rückstellverhaltens, des Trennelements (5) bei einer auf das Trennelement (5) einwirkenden Trennkraft eingerichtet ist.

## Beschreibung

Die Erfindung betrifft eine Trenneinrichtung zur Auftrennung wenigstens eines, insbesondere bandförmigen, Teigstrangs in einzelne Teigstrangelemente, umfassend wenigstens ein Trennelement mit wenigstens einem, insbesondere schneidenförmigen, Trennabschnitt.

Derartige Trenneinrichtungen sind zur Auftrennung bzw. zur Vereinzelung von Teigsträngen in einzelne Teigstrangelemente an und für sich bekannt. Die Trenneinrichtungen umfassen ein oder mehrere Trennelemente mit einem, typischerweise klingen- oder schneidenförmigen, Trennabschnitt. Die Trennelemente werden zur Auftrennung bzw. Vereinzelung eines Teigstrangs in einzelne Teigstrangelemente mit einer bestimmten Trennkraft beaufschlagt.

Aufgrund fertigungsbedingter geometrischer Abweichungen der Geometrie entsprechender Trennelemente von einer Soll-Geometrie respektive betriebsbedingter Abweichungen der Anordnung bzw. Ausrichtung eines Trennelements von einer Soll-Anordnung bzw. Soll-Ausrichtung relativ zu einer einen aufzutrennenden Teigstrang fördernden Fördereinrichtung, ist es regelmäßig notwendig, die Trennelemente mit einer typischerweise im Vergleich zu einer zur Auftrennung eines Teigstrangs in einzelne Teigstrangelemente erforderlichen Soll-Trennkraft hohen Trennkraft zu beaufschlagen, um entsprechende Abweichungen zu kompensieren und eine tatsächliche Auftrennung des Teigstrangs in einzelne Teigstrangelemente sicherzustellen.

Die Beaufschlagung der Trennelemente mit entsprechend hohen Trennkräften führt zu übermäßigem Verschleiß der Trennelemente bzw. gegebenenfalls auch einer entsprechenden Fördereinrichtung.

Diese Problematik ist trotz diverser Justagemöglichkeiten der Anordnung bzw. der Ausrichtung entsprechender Trennelemente relativ zu einem aufzutrennenden Teigstrang nicht zufrieden stellend gelöst.

Der Erfindung liegt die Aufgabe zugrunde, eine demgegenüber verbesserte Trenneinrichtung zur Auftrennung eines Teigstrangs in einzelne Teigstrangelemente anzugeben.

Die Aufgabe wird durch eine Trenneinrichtung gemäß Anspruch 1 gelöst. Die abhängigen Ansprüche betreffen besondere Ausführungsformen der Trenneinrichtung.

Die hierin beschriebene Trenneinrichtung dient der Auftrennung bzw. Vereinzelung wenigstens eines, insbesondere bandförmigen, Teigstrangs in einzelne Teigstrangelemente. Entsprechende Trenneinrichtungen sind typischerweise Bestandteil einer Anlage bzw. Vorrichtung zur Be- und Verarbeitung von Teigsträngen bzw. zur Be- und Verarbeitung von entsprechend vereinzelten Teigstrangelementen.

Zur Auftrennung bzw. Vereinzelung eines Teigstrangs in einzelne Teigstrangelemente umfasst die Trenneinrichtung wenigstens ein, d. h. gegebenenfalls auch mehrere, Trennelement(e) mit (jeweils) wenigstens einem, klingen- oder schneidenförmigen, Trennabschnitt. Ein entsprechender Trennabschnitt kann einstückig mit dem Trennelement ausgebildet sein oder bei einem mehrteiligen, d. h. aus mehreren gesonderten Trennelementabschnitten ausgebildeten, Trennelement als gesonderter Trennelementabschnitt ausgebildet sein.

Ein Trennelement bzw. ein Trennabschnitt wird zur Auftrennung eines Teigstrangs in einzelne Teigstrangelemente mit einer bestimmten Schneid- bzw. Trennkraft bzw. einem bestimmten bzw. definierten Trennkraftverlauf beaufschlagt. Zur Beaufschlagung eines Trennelements bzw. eines Trennabschnitts mit einer entsprechenden Trennkraft ist die Trenneinrichtung mit einer, z. B. (elektro)motorischen oder pneumatischen, Antriebseinrichtung koppelbar oder gekoppelt. Die Antriebseinrichtung ist eingerichtet, eine auf das Trennelement wirkende Trennkraft zu erzeugen bzw. das Trennelement mit einer auf das Trennelement wirkenden Trennkraft zu beaufschlagen. Die Antriebseinrichtung kann einen Bestandteil der Trenneinrichtung bilden.

Bei einer auf das Trennelement wirkenden Trennkraft handelt es sich typischerweise um eine vertikal wirkende Kraft. Die Trennkraft wirkt typischerweise senkrecht relativ zu der Oberfläche eines in einzelne Teigstrangelemente aufzutrennenden Teigstrangs.

Um der eingangs dargestellten Problematik entsprechender Abweichungen, d. h. insbesondere fertigungsbedingter geometrischer Abweichungen der Geometrie entsprechender Trennelemente von einer Soll-Geometrie respektive im Betrieb auftretender Abweichungen der Anordnung bzw. Ausrichtung eines Trennelements von einer Soll-Anordnung bzw. Soll-Ausrichtung relativ zu einer einen aufzutrennenden Teigstrang fördernden Fördereinrichtung, zu begegnen, umfasst die Trenneinrichtung wenigstens ein Strukturelement. Das Strukturelement ist zur gezielten Beeinflussung des elastisch-federnden Verhaltens bzw. der elastisch-federnden Eigenschaften, d. h. insbesondere des elastisch-federnden Rückstellverhaltens bzw. der elastisch-federnden Rückstelleigenschaften, des Trennelements bei einer auf das Trennelement wirkenden Trennkraft eingerichtet. Das Strukturelement verleiht dem Trennelement ein bestimmtes elastisch-federndes Verhalten bzw. bestimmte elastisch-federnde Eigenschaften, d. h. insbesondere ein bestimmtes elastisch-federndes Rückstellverhalten bzw. bestimmte elastisch-federnde Rückstelleigenschaften.

Die Beeinflussung des elastisch-federnden Verhaltens, d. h. insbesondere des elastisch-federnden Rückstellverhaltens, erfolgt typischerweise im Hinblick auf eine auf das Trennelement im Betrieb der Trenneinrichtung konkret einwirkende Trennkraft.

In dem Fall, in dem ein Strukturelement an oder in einem Trennelement angeordnet oder ausgebildet ist, kann das über das Strukturelement gezielt vermittelbare bzw. vermittelte elastisch-federnde Verhalten des Trennelements eine besondere reversible und sonach rein elastische Verformbarkeit des Trennelements bei Einwirkung einer bestimmten Trennkraft ermöglichen. Das Trennelement kann bei Einwirkung einer bestimmten Trennkraft zumindest abschnittsweise reversibel elastisch verformt werden. Ausgehend von einem unverformten Ausgangszustand verformt sich das Trennelement entsprechend zumindest abschnittsweise (rein) elastisch, wenn eine entsprechende Trennkraft wirkt. Wirkt die Trennkraft nicht mehr, nimmt das Trennelement seinen (unverformten) Ausgangszustand wieder ein. Das Strukturelement beeinflusst das elastische Verformungsverhalten des Trennelements zumindest abschnittsweise bzw. verleiht dem Trennelement zumindest abschnittsweise ein bestimmtes elastisches Verformungsverhalten. Unter einer reversiblen Verformung des Trennelements ist insbesondere eine reversible Stauchung des Trennelements in Richtung der einwirkenden Trennkraft zu verstehen. In einer hierzu senkrecht stehenden Richtung ist das Trennelement bei Einwirkung der Trennkraft nicht verformbar.

Ist das Trennelement mit einem Montageelement zur Montage des Trennelements an einem Anschlussbauteil oder einer Anschlussbauteilgruppe der Trenneinrichtung verbunden und ein Strukturelement an oder in dem Montageelement angeordnet oder ausgebildet, kann das über das Strukturelement gezielt vermittelbare bzw. vermittelte elastisch-federnde Verhalten eine besondere reversible und sonach rein elastische Verformbarkeit des Montageelements bei Einwirkung einer bestimmten Trennkraft ermöglichen. Das Montageelement kann bei Einwirkung einer bestimmten Trennkraft zumindest abschnittsweise reversibel elastisch verformt werden. Ausgehend von einem unverformten Ausgangszustand verformt sich das Montageelement entsprechend zumindest abschnittsweise (rein) elastisch, wenn eine entsprechende Trennkraft wirkt. Wirkt die Trennkraft nicht mehr, nimmt das Montageelement seinen (unverformten) Ausgangszustand wieder ein. Das Strukturelement beeinflusst das elastische Verformungsverhalten des Montageelements zumindest abschnittsweise bzw. verleiht dem Montageelement zumindest abschnittsweise ein bestimmtes elastisches Verformungsverhalten. Unter einer reversiblen Verformung des Montageelements ist insbesondere eine Biegung des Montagelements um eine senkrecht zur Richtung der einwirkenden Trennkraft liegende Achse zu verstehen. In einer hierzu senkrecht stehenden Richtung ist das Trennelement bei Einwirkung der Trennkraft nicht verformbar.

Die Trenneinrichtung kann insgesamt bewegbar relativ zu einer einen aufzutrennenden Teigstrang fördernden Fördereinrichtung gelagert sein. Die Trenneinrichtung kann im Rahmen eines vorzunehmenden Trennvorgangs in eine definierte Ausrichtung bzw. Position relativ zu der Fördereinrichtung respektive relativ zu einem auf der Fördereinrichtung befindlichen Teigstrang bewegt werden.

Ist das Trennelement mit einem Montageelement zur Montage des Trennelements an einem Anschlussbauteil oder einer Anschlussbauteilgruppe der Trenneinrichtung verbunden und ein Strukturelement an oder in dem Montageelement angeordnet oder ausgebildet, kann bei einer in eine entsprechende definierte Ausrichtung bzw. Position relativ zu einer Fördereinrichtung bewegten Trenneinrichtung eine Verformung des Montageelements auftreten, welche in Verbindung mit dessen mechanischen Eigenschaften, insbesondere dessen Steifigkeit, zu der Ausbildung einer Trennkraft bzw. eines bestimmten bzw. definierten Trennkraftverlaufs entlang des Trennabschnitts führt.

Unabhängig von der Anordnung bzw. Ausbildung eines entsprechenden Strukturelements an einem Trennelement oder an einem Montageelement beeinflusst dieses jedenfalls (zumindest) das elastisch-federnde Verhalten bzw. das elastisch-federnde Rückstellverhalten eines Trennelements.

Durch die gezielte Beeinflussung des elastisch-federnden Verhaltens, insbesondere des elastisch-federnden Rückstellverhaltens, des Trennelements, kann ein Teil einer auf das Trennelement wirkenden Trennkraft durch die beschriebene reversible elastische Verformung des Trennelements bzw. des Montageelements aufgenommen werden. Derart werden Verschleißerscheinungen, welche auf hohe Trennkräfte aufgrund entsprechender Abweichungen, insbesondere fertigungsbedingte geometrische Abweichungen der Geometrie entsprechender Trennelemente von einer Soll-Geometrie respektive im Betrieb der Trenneinrichtung auftretende Abweichungen der Anordnung bzw. Ausrichtung eines Trennelements von einer Soll-Anordnung bzw. Soll-Ausrichtung relativ zu einer einen aufzutrennenden Teigstrang fördernden Fördereinrichtung, zurückzuführen sind, minimiert.

Weiterhin können durch die gezielte Beeinflussung des elastisch-federnden Verhaltens, insbesondere des elastisch-federnden Rückstellverhaltens, des Trennelements Verformungen, die durch entsprechende Abweichungen auftreten, gezielt aufgenommen werden, sodass der Trennkraftverlauf am Trennabschnitt (weitgehend) einem konstanten Soll-Trennkraftverlauf entspricht.

Ein entsprechendes Strukturelement ist insbesondere zur Ausbildung eines konstanten Trennkraftverlaufs entlang des Trennabschnitts eines entsprechenden Trennelements eingerichtet. Mithin lässt sich vermittels eines entsprechenden Strukturelements bei Einwirkung einer Trennkraft ein (weitgehend) konstanter Trennkraftverlauf und somit eine (weitgehend) konstante Streckenlast entlang des Trennabschnitts eines jeweiligen Trennelements erreichen. Vermittels entsprechender Strukturelemente können durch Abweichungen, d. h. insbesondere fertigungsbedingte geometrische Abweichungen der Geometrie entsprechender Trennelemente von einer Soll-Geometrie respektive im Betrieb der Trenneinrichtung auftretende Abweichungen der Anordnung bzw. Ausrichtung eines Trennelements von einer Soll-Anordnung bzw. Soll-Ausrichtung relativ zu einer einen aufzutrennenden Teigstrang fördernden Fördereinrichtung, bedingte Änderungen des Trennkraftverlaufs entlang des Trennabschnitts vermieden bzw. zumindest erheblich reduziert werden.

Analoges gilt selbstverständlich für eine mehrere Trennelemente aufweisende Trenneinrichtung; mithin kann der Kraftverlauf auch über mehrere, insbesondere reihenartig angeordnete, Trennelemente bzw. Trennabschnitte hinweg (weitgehend) konstant gehalten werden.

In der Folge ist es auch möglich, den konstruktiven Aufbau entsprechender Fördereinrichtungen zu vereinfachen. Entsprechende im Betrieb der Trenneinrichtung auftretende Abweichungen der Anordnung bzw. Ausrichtung eines Trennelements von einer Soll-Anordnung bzw. Soll-Ausrichtung relativ zu einer einen aufzutrennenden Teigstrang fördernden Fördereinrichtung gehen regelmäßig von der Fördereirichtung aus. Zum Ausgleich entsprechender Abweichungen, welche u. a. auf eine gewisse Welligkeit eines der Fördereinrichtung zugehörigen Förderbands zurückzuführen sind, sind entsprechende Fördereinrichtungen bis dato regelmäßig mit bestimmten Ausgleichs- bzw. Toleranzelementen, d. h. u. a. Unterlagen zum Ausgleich einer Welligkeit eines Förderbands, ausgestattet, was den konstruktiven Aufbau entsprechender Fördereinrichtungen vergleichsweise aufwändig gestaltete.

Durch die gezielte Beeinflussung des elastisch-federnden Verhaltens, insbesondere des elastisch-federnden Rückstellverhaltens, des Trennelements, kann durch das Trennelement ein Toleranzausgleich geschaffen werden, welcher die Notwendigkeit eines Toleranzausgleichs seitens entsprechender Fördereinrichtungen, d. h. die Vorsehung entsprechender Ausgleichs- bzw. Toleranzelemente, nicht oder in zumindest geringerem Ausmaß erforderlich macht und den konstruktiven Aufbau entsprechender Vorrichtung damit vereinfacht.

Sofern mehrere Strukturelemente vorgesehen sind, können diese das elastisch-federnde Verhalten eines Trennelements, gegebenenfalls auch eines Montageelements, in unterschiedlichen Bereichen des Trennelements, gegebenenfalls auch des Montageelements, gezielt beeinflussen.

Wie erwähnt, kann wenigstens ein Strukturelement an oder in einem Trennelement ausgebildet oder angeordnet sein. Ein Strukturelement kann sonach als unmittelbarer Bestandteil eines Trennelements ausgebildet und sonach unmittelbar in ein Trennelement integriert sein. Ein Strukturelement kann jedoch auch als gesondertes Bauteil bzw. als gesonderte Bauteilgruppe an oder in einem Trennelement angeordnet bzw. befestigt sein. Es handelt sich hierbei jedenfalls um eine vergleichsweise kompakte Anordnung bzw. Ausbildung eines entsprechenden Strukturelements.

Wie ebenso erwähnt, kann wenigstens ein Strukturelement an oder in einem mit einem Trennelement, insbesondere einstückig, verbundenen Montageelement angeordnet oder ausgebildet sein. Ein Montageelement ist, wie erwähnt, zur Montage des Trennelements an einem Anschlussbauteil oder einer Anschlussbauteilgruppe der Trenneinrichtung eingerichtet. Die Montage des Trennelements an einem Anschlussbauteil oder einer Anschlussbauteilgruppe der Trenneinrichtung ist typischerweise (beschädigungs- bzw. zerstörungsfrei) lösbar. Ein Anschlussbauteil bzw. eine Anschlussbauteilgruppe kann z. B. als eine Antriebseinrichtung, welche dazu eingerichtet ist, eine auf das Trennelement wirkende Trennkraft zu erzeugen, ausgebildet sein oder wenigstens eine solche umfassen.

Zur Montage des Trennelements an einem entsprechenden Anschlussbauteil oder einer entsprechenden Anschlussbauteilgruppe der Trenneinrichtung kann an dem Montageelement wenigstens ein Montagemittel angeordnet oder ausgebildet sein. Bei einem Montagemittel kann es sich z. B. um eine Montagebohrung, in welche ein hierzu korrespondierender, z. B. bolzenartiger, Montageansatz eingreifen kann oder um einen, z. B. bolzenartigen, Montageansatz, welcher in eine hierzu korrespondierende Montagebohrung eingreifen kann, handeln.

Ein entsprechendes Montagemittel kann bezogen auf eine bestimmte Breite bzw. Länge eines entsprechenden Trennelements außermittig angeordnet oder ausgebildet sein. Hierunter ist insbesondere zu verstehen, dass der Mittelpunkt eines entsprechenden Montagemittels relativ zu dem Mittelpunkt der Breite bzw. Länge eines entsprechenden Trennelements versetzt liegt. Hierdurch ergäbe sich bei Einwirkung einer entsprechenden Trennkraft ein unterschiedliches elastisch-federndes Verhalten jeweiliger Trennelementbereiche links und rechts des Montagemittels bzw. dessen Mittelpunkt, insbesondere bedingt durch ein unterschiedlich steifes Verhalten jeweiliger Trennelementbereiche links und rechts des Montagemittels bei Einwirkung der Trennkraft; das Trennelement würde bei Einwirkung einer Trennkraft links und rechts des Montagemittels unterschiedlich "reagieren". Die Anordnung bzw. Ausrichtung und die geometrischen Abmessungen eines entsprechenden Strukturelements sind zweckmäßig im Hinblick auf diese Problematik festgelegt. Das Strukturelement erstreckt sich sonach zweckmäßig derart entlang des Trennelements und/oder entlang des Montageelements, dass sich ein (weitgehend) konstanter Trennkraftverlauf entlang des Trennabschnitts ergibt. Dies kann beispielsweise durch eine ebenso außermittige Anordnung bzw. Ausbildung des Strukturelements bezogen auf eine bestimmte Breite bzw. Länge eines entsprechenden Trennelements realisiert sein. Hierunter ist insbesondere zu verstehen, dass der Mittelpunkt, z. B. der Längsachse, des Strukturelements ebenso relativ zu dem Mittelpunkt des Montageelements versetzt liegt. Mit anderen Worten sind die Anordnung bzw. Ausrichtung wie auch die geometrischen Abmessungen des Strukturelements zweckmäßig derart gewählt, um die auf eine bezogen auf eine bestimmte Breite bzw. Länge eines entsprechenden Trennelements außermittige Anordnung bzw. Ausbildung eines entsprechenden Montagemittels zurückzuführenden unterschiedlichen elastisch-federnden Eigenschaften des Trennelements bei Einwirkung einer entsprechenden Trennkraft auszugleichen.

An einem Montageelement können weitere Montagemittel zur Montage unterschiedlicher Funktionskomponenten angeordnet oder ausgebildet sein. Bei entsprechenden Montagemitteln kann es sich ebenso um Montagebohrungen bzw. Montageansätze handeln.

Über entsprechende Montagemittel zur Montage des Trennelements an einem entsprechenden Anschlussbauteil oder einer entsprechenden Anschlussbauteilgruppe der Trenneinrichtung bzw. entsprechende (weitere) Montagemittel zur Montage unterschiedlicher Funktionskomponenten an einem Montageelement bzw. im Weiteren noch zu nennende an dem Montageelement angeordnete oder ausgebildete Handhabungselemente wird das elastisch-federnde Verhalten des Montageelements bzw. des Trennelements in gewisser Weise beeinflusst. Die Anordnung bzw. Ausrichtung wie auch die geometrischen Abmessungen eines entsprechenden Strukturelements sind zweckmäßig unter Berücksichtigung der durch entsprechende Montagemittel gegebenen Einflüsse auf das elastisch-federnde Verhalten des Montageelements bzw. des Trennelements gewählt, sodass sich ein (weitgehend) konstanter Trennkraftverlauf entlang des Trennabschnitts realisieren lässt.
Vorstehende Ausführungen gelten unabhängig davon, ob ein entsprechendes Montageelement eine (im Wesentlichen) symmetrische oder eine (im Wesentlichen) unsymmetrische Grundform aufweist.

Ein Montagelement kann eine plattenförmige geometrische Gestalt aufweisen. Ein Trennelement kann winklig, insbesondere senkrecht, relativ zu dem Montageelement verlaufend an dem Montageelement angeordnet oder ausgebildet sein. Ein Trennelement kann sonach als winklig, insbesondere senkrecht, von einem plattenförmig gestalteten Montageelement abragender (vertikaler) Schenkel ausgebildet sein. Selbstverständlich können mehrere Trennelemente in entsprechender Weise mit einem entsprechend plattenförmig gestalteten Montageelement verbunden sein.

Bei einer einstückigen Ausführung bzw. Verbindung eines Trennelements mit einem Montageelement kann das Trennelement und/oder das Montageelement durch einen Umformvorgang, insbesondere einen Biegevorgang, auf fertigungstechnisch einfache und somit wirtschaftliche Weise ausgebildet werden. Ganz allgemein gilt, dass es sich bei einem Trennelement bzw. einem Montageelement um ein auf fertigungstechnisch einfache und somit wirtschaftliche Weise ausbildbares Stanz-/Biegeteil handeln kann.

Die konkrete konstruktive Gestaltung eines Strukturelements hängt insbesondere von einer ursprünglichen Konstruktion bzw. den ursprünglichen Konstruktionsparametern und dem sich hieraus ergebenden ursprünglichen elastisch-federnden Verhalten eines Trennelements (ohne entsprechende Strukturelemente) bzw. eines Montageelements (ohne entsprechende Strukturelemente) ab. Grundsätzlich kann über ein Strukturelement zur Beeinflussung des elastisch-federnden Verhaltens eine gezielte abschnittsweise Schwächung oder eine gezielte abschnittsweise Stärkung der strukturellen Eigenschaften, insbesondere der mechanischen Stabilität, d. h. insbesondere der Steifigkeit bzw. Nachgiebigkeit gegenüber einer einwirkenden Trennkraft, eines Trennelements bzw. eines Montageelements realisiert werden.

Weist ein Trennelement bzw. ein Montageelement ursprünglich eine vergleichsweise hohe mechanische Stabilität bzw. vergleichsweise geringe elastisch-federnde Eigenschaften im Hinblick auf eine auf dieses im Betrieb der Trenneinrichtung einwirkende Trennkraft auf, d. h. ist ein Trennelement bzw. ein Montageelement ursprünglich vergleichsweise steif bzw. wenig nachgiebig, ist ein Strukturelement zweckmäßig dazu eingerichtet, gezielt eine abschnittsweise Erniedrigung der mechanischen Stabilität und somit eine abschnittsweise Erhöhung des elastisch-federnden Verhaltens im Hinblick auf eine im Betrieb der Trenneinrichtung einwirkende Trennkraft, d. h. eine zumindest abschnittsweise Erniedrigung der Steifigkeit bzw. eine zumindest abschnittsweise Erhöhung der Nachgiebigkeit, herbeizuführen. Diese Variante gilt insbesondere für Trennelement- bzw. Montageelementkonstruktionen, welche bei den im Betrieb der Trenneinrichtung einwirkenden Trennkräften ursprünglich nicht oder zu wenig reversibel elastisch verformt würden.

In diesem Fall kann ein Strukturelement als ein eine Erniedrigung bzw. Schwächung der strukturellen Eigenschaften, insbesondere der mechanischen Stabilität bzw. Biegestabilität, eines Trennelements und/oder eines entsprechenden Montageelements zur Montage des Trennelements an einem Anschlussbauteil oder einer Anschlussbauteilgruppe der Trenneinrichtung herbeiführendes Schwächungselement ausgebildet sein oder wenigstens ein solches umfassen.

Ein Schwächungselement, kann z. B. durch eine lokale Wandstärkenreduzierung, d. h. eine lokale Materialreduzierung, eines Trennelements und/oder eines Montageelements ausgebildet sein. Die Wandstärkenreduzierung bedingt eine lokale Destabilisierung bzw. Entsteifung des Trennelements bzw. des Montageelements.

Ein Schwächungselement kann auch durch einen aus einem im Vergleich zu übrigen Trennelementabschnitten bzw. Montageelementabschnitten weniger stabilen bzw. weniger steifen Materialabschnitt ausgebildeten Trennelementabschnitt bzw. Montageelementabschnitt ausgebildet sein. Dies gilt insbesondere für mehrteilige, d. h. aus mehreren gesonderten Trennelementabschnitten ausgebildete, Trennelemente bzw. für mehrteilige, d. h. aus mehreren gesonderten Montageelementabschnitten ausgebildete, Montageelemente. Einzelne Trennelement- bzw. Montageelementabschnitte können hier z. B. aus weniger stabilen bzw. weniger steifen Materialien, d. h. z. B. elastomeren bzw. elastomerähnlichen Materialien, insbesondere Gummimaterialien, oder aus durch Destabilisierungs- bzw. Entsteifungselemente, d. h. z. B. ein- oder mehrfach ausgebaucht oder ziehharmonika- bzw. zick-zackförmig ausgebildete Konstruktionselemente, gezielt destabilisierten bzw. entsteiften Materialabschnitten ausgebildet sein.

Weiterhin kann ein Schwächungselement durch eine spanend oder spanlos ausgebildete Ausnehmung, Durchbrechung, Öffnung oder Vertiefung, in einem Trennelement und/oder in einem Montageelement ausgebildet sein. Entsprechende Schwächungselemente können eine längliche Gestalt aufweisen, d. h. insbesondere als Langloch, Schlitz oder Nut, ausgebildet sein. Eine längliche Gestalt eines Schwächungselements kann auch durch eine L- oder T-Form oder eine Doppel-L- oder Doppel-T-Form gegeben sein. Die Längsachse entsprechend länglich gestalteter Schwächungselemente erstreckt sich typischerweise parallel zu dem Trennabschnitt des Trennelements. Entsprechende Schwächungselemente können auch als gitter- oder siebartig angeordnete, z. B. runde, rundliche oder eckige, Öffnungen ausgebildet sein.

In allen beispielhaft genannten Varianten entsprechender Schwächungselemente wird das elastisch-federnde Verhalten des Trennelements bzw. des Montageelements gezielt beeinflusst; das Trennelement bzw. das Montageelement ist bei Einwirkung einer entsprechenden Trennkraft lokal biegsam(er) bzw. nachgiebig(er) bzw. elastisch verformbar(er).

Weist ein Trennelement dagegen ursprünglich eine vergleichsweise geringe mechanische Stabilität bzw. vergleichsweise hohe elastisch-federnde Eigenschaften im Hinblick auf eine auf dieses einwirkende Trennkraft auf, d. h. ist ein Trennelement ursprünglich zu wenig steif bzw. zu nachgiebig, ist ein Strukturelement zweckmäßig dazu eingerichtet, gezielt eine abschnittsweise Erhöhung der mechanischen Stabilität und somit eine abschnittsweise Erniedrigung des elastisch-federnden Verhaltens im Hinblick auf eine im Betrieb der Trenneinrichtung einwirkende Trennkraft auf, d. h. eine zumindest abschnittsweise Erhöhung der Steifigkeit bzw. eine zumindest abschnittsweise Erniedrigung der Nachgiebigkeit, herbeizuführen. Diese Variante gilt insbesondere für Trennelement- bzw. Montageelementkonstruktionen, welche bei den im Betrieb der Trenneinrichtung einwirkenden Trennkräften ursprünglich zu sehr reversibel elastisch verformt würden.

In diesem Fall kann ein Strukturelement als ein eine Erhöhung bzw. Stärkung der strukturellen Eigenschaften, insbesondere der mechanischen Stabilität bzw. Biegestabilität, eines Trennelements und/oder eines entsprechenden Montageelements zur Montage des Trennelements an einem Anschlussbauteil oder einer Anschlussbauteilgruppe der Trenneinrichtung herbeiführendes Verstärkungselement ausgebildet sein oder wenigstens ein solches umfassen.

Ein Verstärkungselement kann z. B. durch eine lokale Wandstärkenerhöhung eines Trennelements und/oder eines Montageelements ausgebildet sein. Die Wandstärkenerhöhung bedingt eine lokale Stabilisierung bzw. Versteifung des Trennelements bzw. des Montageelements.

Ein Verstärkungselement kann ferner durch einen aus einem im Vergleich zu übrigen Trennelementabschnitten bzw. Montageelementabschnitten stabileren bzw. steiferen Materialabschnitt ausgebildeten Trennelementabschnitt bzw. Montageelementabschnitt ausgebildet sein. Dies gilt insbesondere für mehrteilige, d. h. aus mehreren gesonderten Trennelementabschnitten ausgebildete, Trennelemente bzw. für aus mehreren gesonderten Montageelementabschnitten ausgebildete Montageelemente. Einzelne Trennelementabschnitte bzw. Montageelementabschnitte können aus stabileren bzw. steiferen Materialien oder aus durch Stabilisierungs- bzw. Versteifungselemente, z. B. Rippen- oder Sickenelemente, gezielt stabilisierten bzw. versteiften Materialabschnitten ausgebildet sein.

Weiterhin kann ein Verstärkungselement durch eine an dem Trennelement und/oder dem Montageelement lokal befestigte Verstärkungsstruktur ausgebildet sein. Eine entsprechende Verstärkungsstruktur kann z. B. eine stabile bzw. steife Verstärkungsplatte sein, welche sich über einen lokal zu stabilisierenden bzw. zu versteifenden Bereich eines Trennelements bzw. eines Montageelements erstreckt.

Entsprechende Verstärkungsstrukturen können relativ zu einem Trennelement bzw. einem Montageelement bewegbar an einem Trennelement bzw. einem Montageelement gelagert sein, sodass diese gezielt über einen lokal zu stabilisierenden bzw. versteifenden Bereich des Trennelements bzw. des Montageelements bewegbar, d. h. z. B. verschiebbar, verschwenkbar, etc., sind, um diesen Bereich bedarfsweise gezielt zu stabilisieren bzw. zu versteifen. Eine bewegbare Lagerung einer entsprechenden Verstärkungsstruktur kann z. B. über eine an dem Trennelement bzw. an dem Montageelement angeordnete oder ausgebildete Führungseinrichtung realisiert sein. Eine entsprechende Führungseinrichtung kann z. B. gelenk- oder schienenartige Führungsmittel aufweisen.

In allen beispielhaft genannten Varianten entsprechender Verstärkungselemente wird das elastisch-federnde Verhalten des Trennelements bzw. Montageelements gezielt beeinflusst; das Trennelement bzw. das Montageelement ist bei Einwirkung einer entsprechenden Trennkraft lokal weniger biegsam bzw. weniger nachgiebig.

Um ein Trennelement bzw. ein Montageelement von Haus aus mit einem besonderen elastisch-federnden Verhalten auszustatten, ist es zweckmäßig, dass ein Trennelement und/oder ein Montageelement zumindest abschnittsweise, insbesondere vollständig, aus einem elastisch-federnden bzw. nachgiebigen Werkstoff, d. h. insbesondere einem elastisch-federnden bzw. nachgiebigen metallischen Werkstoff, z. B. einem Leichtmetall, z. B. Aluminium, bzw. einer Leichtmetalllegierung oder einem Edel- bzw. Federstahl, ausgebildet ist. Ein entsprechender metallischer Werkstoff kann zur Realisierung eines besonderen elastisch-federnden Verhaltens eine bestimmte (innere) mechanische Vorspannung aufweisen. Selbstverständlich kann ein Trennelement bzw. ein Montageelement zumindest abschnittsweise, insbesondere vollständig, auch aus einem nicht metallischen Werkstoff, d. h. insbesondere einem Kunststoff oder einem Faserverbundmaterial, insbesondere einem Faserverbundkunststoff, ausgebildet sein. Kunststoffe zeichnen sich typischerweise durch von Haus aus vergleichsweise hohe elastisch-federnde Eigenschaften aus. Entsprechendes gilt, je nach Aufbau und Zusammensetzung, für Faserverbundmaterialien.

Die Trenneinrichtung kann wenigstens ein Handhabungselement ("Picker") zum Handhaben eines aufzutrennenden Teigstrangs oder eines vereinzelten Teigstrangelements umfassen. Derart kann der Funktionsumfang der Trenneinrichtung erweitert werden, als diese nicht allein zur Auftrennung eines Teigstrangs, sondern auch - vermittels entsprechender Handhabungselemente - zum Handhaben, d. h. z. B. zu einem zeitweisen Halten, eines aufzutrennenden Teigstrangs bzw. vereinzelter Teigstrangelemente eingerichtet ist. Das Handhaben bzw. Halten eines aufzutrennenden Teigstrangs kann das Auftrennungsergebnis verbessern, da der Teigstrang vor bzw. während eines Auftrennungsvorgangs in Position gehalten werden kann.

Ein Handhabungselement kann z. B. an einem entsprechenden Montageelement angeordnet oder ausgebildet sein. Typischerweise sind mehrere Handhabungselemente an einem Montageelement angeordnet oder ausgebildet. Es ergibt sich hierbei zweckmäßig eine zahnreihen- bzw. zinnenartig benachbarte Anordnung entsprechender Handhabungselemente. Analog einem Trennelement können Handhabungselemente als winklig, insbesondere senkrecht, von einem, wie oben erwähnt, z. B. plattenförmig gestalteten, Montageelement abragende (vertikale) Schenkel ausgebildet sein. Die Handhabungselemente können einstückig mit dem Montageelement ausgebildet sein.

Ein Trennelement kann um eine zu der Wirkachse, d. h. typischerweise einer vertikalen Achse bezüglich der Oberfläche des aufzutrennenden Teigstrangs, bzw. Wirkrichtung einer auf dieses aufzubringenden Trennkraft parallelen Drehachse drehbar gelagert sein. Durch das Drehen eines Trennelements können unterschiedliche Schnitt- bzw. Trennmuster realisiert werden. In dem Fall mehrerer Trennelemente kann die Produktivität der Trenneinrichtung erhöht werden. Die drehbare Lagerung eines Trennelements ist über einen geeigneten Drehantrieb realisierbar. Der Drehantrieb ist unmittelbar oder mittelbar, d. h. insbesondere vermittels eines entsprechenden Montageelements, mit einem Trennelement koppelbar oder gekoppelt. Selbstverständlich kann ein entsprechender Drehantrieb auch in eine weiter oben genannte Antriebseinrichtung zur Beaufschlagung eines Trennelements mit einer entsprechenden Trennkraft integriert sein oder umgekehrt.

Die Erfindung betrifft ferner eine Vorrichtung zur Be- oder Verarbeitung von, insbesondere bandförmigen, Teigsträngen. Die Vorrichtung umfasst wenigstens eine wie vorstehend beschriebene Trenneinrichtung zur Auftrennung wenigstens eines, insbesondere bandförmigen, Teigstrangs in einzelne Teigstrangelemente. Die Vorrichtung kann weiterhin wenigstens eine Fördereinrichtung zur Förderung wenigstens eines, insbesondere bandförmigen, Teigstrangs entlang einer die Trenneinrichtung beinhaltenden Förderstrecke umfassen. Eine entsprechende Fördereinrichtung kann als Förderband ausgebildet sein oder wenigstens ein solches umfassen. Sämtliche Ausführungen im Zusammenhang mit der Trenneinrichtung gelten analog für die Vorrichtung zur Be- oder Verarbeitung von, insbesondere bandförmigen, Teigsträngen.

Die Erfindung betrifft ferner ein Verfahren zur Auftrennung wenigstens eines, insbesondere bandförmigen, Teigstrangs in einzelne Teigstrangelemente. Zur Auftrennung des wenigstens einen, insbesondere bandförmigen, Teigstrangs in einzelne Teigstrangelemente wird eine wie vorstehend beschriebene Trenneinrichtung verwendet. Sämtliche Ausführungen im Zusammenhang mit der Trenneinrichtung gelten analog für das Verfahren zur Auftrennung von, insbesondere bandförmigen, Teigsträngen in einzelne Teigstrangelemente.

Die Erfindung ist anhand von Ausführungsbeispielen in den Zeichnungsfiguren näher erläutert. Dabei zeigen:

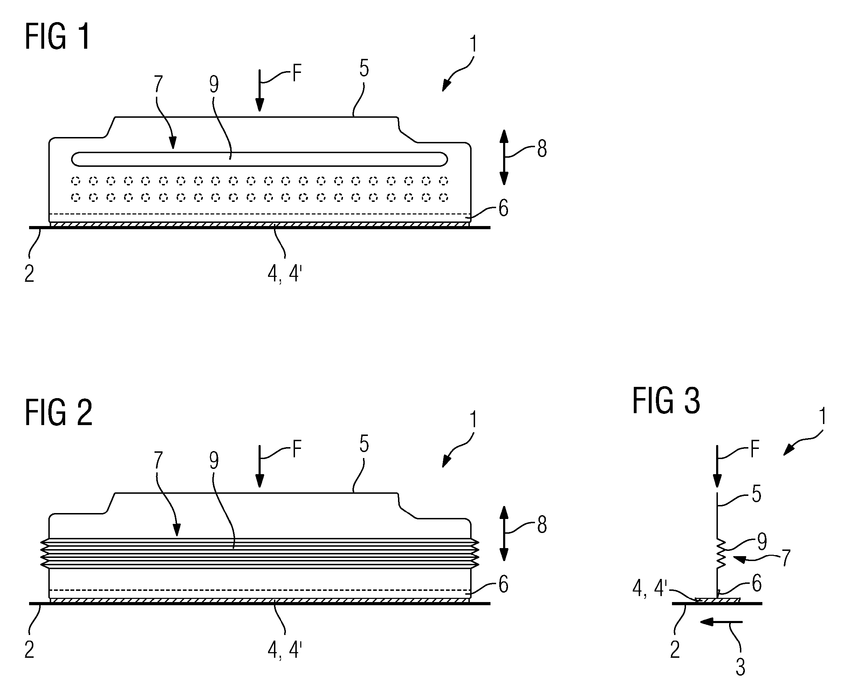

- Fig. 1 - 14: je eine Prinzipdarstellung einer Trenneinrichtung gemäß einem Ausführungsbeispiel.

Die Fig. 1 - 14 zeigen jeweils Prinzipdarstellungen einer Trenneinrichtung 1 gemäß unterschiedlichen Ausführungsbeispielen. Die in den Fig. gezeigten Trenneinrichtungen 1 dienen jeweils zur Auftrennung eines auf einer Fördereinrichtung 2 in einer durch den Pfeil 3 angedeuteten Förderrichtung geförderten, insbesondere bandförmigen, Teigstrangs 4 in einzelne Teigstrangelemente 4'. Die Trenneinrichtungen 1 bilden typischerweise einen Bestandteil einer Anlage bzw. Vorrichtung zur Be- und Verarbeitung von Teigsträngen 4 bzw. zur Be- und Verarbeitung von entsprechend vereinzelten Teigstrangelementen 4'.

Zur Auftrennung bzw. Vereinzelung eines Teigstrangs 4 in einzelne Teigstrangelemente 4' umfassen die Trenneinrichtungen 1 wenigstens ein Trennelement 5 mit einem klingen- oder schneidenförmigen Trennabschnitt 6. Der Trennabschnitt 6 kann einstückig mit einem Trennelement 5 ausgebildet sein oder bei einem aus mehreren gesonderten Trennelementabschnitten 5' ausgebildeten Trennelement 5 als gesonderter Trennelementabschnitt 5' ausgebildet sein.

Ein jeweiliges Trennelement 5 bzw. ein jeweiliger Trennabschnitt 6 wird zur Auftrennung eines Teigstrangs 4 in einzelne Teigstrangelemente 4' mit einer in den Fig. durch den Pfeil F angedeuteten Schneid- bzw. Trennkraft beaufschlagt. Es ergibt sich ein bestimmter Trennkraftverlauf entlang des Trennabschnitts 6. Zur Beaufschlagung des Trennelements 5 bzw. des Trennabschnitts 6 mit einer entsprechenden Trennkraft sind die Trenneinrichtungen 1 mit einer, z. B. (elektro)motorischen oder pneumatischen, Antriebseinrichtung (nicht gezeigt) koppelbar oder gekoppelt. Die Antriebseinrichtung ist eingerichtet, eine auf das Trennelement 5 wirkende Trennkraft zu erzeugen bzw. das Trennelement 5 mit einer auf dieses wirkenden Trennkraft zu beaufschlagen. Die Antriebseinrichtung kann einen Bestandteil einer jeweiligen Trenneinrichtung 1 bilden.

Bei einer auf das Trennelement 5 wirkenden Trennkraft handelt es sich typischerweise um eine vertikal wirkende Kraft. Die Trennkraft wirkt typischerweise senkrecht relativ zu der Oberfläche eines in einzelne Teigstrangelemente 4' aufzutrennenden Teigstrangs 4.

Um der Problematik fertigungsbedingter geometrischer Abweichungen der Geometrie entsprechender Trennelemente 5 von einer Soll-Geometrie respektive im Betrieb auftretender Abweichungen der Anordnung bzw. Ausrichtung eines Trennelements 5 von einer Soll-Anordnung bzw. Soll-Ausrichtung relativ zu einer einen aufzutrennenden Teigstrang 4 fördernden Fördereinrichtung 2 zu begegnen, umfasst die Trenneinrichtung 1 ein oder mehrere Strukturelemente 7. Ein jeweiliges Strukturelement 7 ist zur gezielten Beeinflussung des elastisch-federnden Verhaltens bzw. der elastisch-federnden Eigenschaften, d. h. insbesondere des elastisch-federnden Rückstellverhaltens bzw. der elastisch-federnden Rückstelleigenschaften, eines jeweiligen Trennelements 5 bei einer auf das Trennelement 5 wirkenden Trennkraft eingerichtet. Ein Strukturelement 7 verleiht einem Trennelement 5 sonach ein bestimmtes elastisch-federndes Verhalten bzw. bestimmte elastisch-federnde Eigenschaften, d. h. insbesondere ein bestimmtes elastisch-federndes Rückstellverhalten bzw. bestimmte elastisch-federnde Rückstelleigenschaften.

Die Beeinflussung des elastisch-federnden Verhaltens, d. h. insbesondere des elastisch-federnden Rückstellverhaltens, erfolgt im Hinblick auf eine auf das Trennelement 5 im Betrieb der Trenneinrichtung 1 konkret einwirkende Trennkraft.

In den in den Fig. 1 - 14 gezeigten Ausführungsbeispielen sind jeweilige Strukturelemente 7 dazu eingerichtet, gezielt eine abschnittsweise Erniedrigung der mechanischen Stabilität und somit eine abschnittsweise Erhöhung des elastisch-federnden Verhaltens im Hinblick auf eine im Betrieb der Trenneinrichtung 1 einwirkende Trennkraft, d. h. eine zumindest abschnittsweise Erniedrigung der Steifigkeit bzw. eine zumindest abschnittsweise Erhöhung der Nachgiebigkeit, herbeizuführen.

In den in Fig. 1 - 7 gezeigten Ausführungsbeispielen sind die Strukturelemente 7 jeweils als ein eine Erniedrigung bzw. Schwächung der strukturellen Eigenschaften, insbesondere der mechanischen Stabilität bzw. Biegestabilität, eines jeweiligen Trennelements 5 herbeiführendes Schwächungselement 9 ausgebildet.

In den Ausführungsbeispielen gemäß den Fig. 1 - 7 sind entsprechende Strukturelemente 7 jeweils in einem Trennelement 5 angeordnet bzw. ausgebildet und somit unmittelbarer Bestandteil eines jeweiligen Trennelements 5. Über das durch ein jeweiliges Strukturelement 7 vermittelte elastisch-federnde Verhalten eines jeweiligen Trennelements 5 bei einer einwirkenden Trennkraft ist eine besondere reversible und sonach rein elastische Verformbarkeit des Trennelements 5 bei Einwirkung der Trennkraft ermöglicht. Das Trennelement 5 kann bei Einwirkung einer bestimmten Trennkraft zumindest abschnittsweise reversibel elastisch verformt werden. Das Strukturelement 7 beeinflusst das elastische Verformungsverhalten des Trennelements 5 zumindest abschnittsweise bzw. verleiht dem Trennelement 5 zumindest abschnittsweise ein bestimmtes elastisches Verformungsverhalten. Unter einer reversiblen Verformung des Trennelements 5 ist insbesondere eine durch den Doppelpfeil 8 angedeutete reversible Stauchung des Trennelements 5 in Richtung der einwirkenden Trennkraft zu verstehen. In einer hierzu senkrecht stehenden Richtung ist das Trennelement 5 bei Einwirkung der Trennkraft nicht verformbar.

Durch die gezielte Beeinflussung des elastisch-federnden Verhaltens, insbesondere des elastisch-federnden Rückstellverhaltens, des Trennelements 5 kann ein Teil der auf das Trennelement 5 wirkenden Trennkraft durch die beschriebene reversible elastische Verformung des Trennelements 5 aufgenommen werden. Derart werden Verschleißerscheinungen, welche auf hohe Trennkräfte aufgrund fertigungsbedingter geometrischer Abweichungen der Geometrie des Trennelements 5 von einer Soll-Geometrie respektive im Betrieb der Trenneinrichtung 1 auftretender Abweichungen der Anordnung bzw. Ausrichtung des Trennelements 5 von einer Soll-Anordnung bzw. Soll-Ausrichtung relativ zu einer einen aufzutrennenden Teigstrang 4 fördernden Fördereinrichtung 2 zurückzuführen sind, minimiert.

Weiterhin werden durch die gezielte Beeinflussung des elastisch-federnden Verhaltens, insbesondere des elastisch-federnden Rückstellverhaltens, des Trennelements 5 Verformungen, die durch entsprechende Abweichungen auftreten, gezielt aufgenommen werden, sodass der Trennkraftverlauf am Trennabschnitt 6 (weitgehend) einem konstanten Soll-Trennkraftverlauf entspricht.

Mithin lässt sich vermittels eines entsprechenden Strukturelements 7 bei Einwirkung einer Trennkraft ein (weitgehend) konstanter Trennkraftverlauf entlang des Trennabschnitts 6 eines jeweiligen Trennelements 5 erreichen und somit durch entsprechende Abweichungen bedingte Änderungen des Trennkraftverlaufs entlang des Trennabschnitts 6 vermieden bzw. zumindest erheblich reduziert werden.

Fig. 1 zeigt eine Prinzipdarstellung einer Trenneinrichtung 1 gemäß einem ersten Ausführungsbeispiel in einer Frontansicht. In dem Ausführungsbeispiel ist ein Schwächungselement 9 durch eine lokale Materialreduzierung des Trennelements 5 ausgebildet. Konkret ist das Schwächungselement 9 durch eine länglich gestaltete Ausnehmung bzw. Durchbrechung bzw. Öffnung in dem Trennelement 5 ausgebildet. Das Schwächungselement 9 ist entsprechend als Langloch bzw. Schlitz ausgebildet. Die Längsachse des Schwächungselements 9 erstreckt sich parallel zu dem Trennabschnitt 6 des Trennelements 5. Wie durch die Strichlierung angedeutet, können in einem Trennelement 5 selbstverständlich mehrere gleich oder unterschiedlich gestaltete Schwächungselemente 9 ausgebildet sein. Konkret ist durch die Strichlierung eine Lochblechstruktur als alternative oder ergänzende Ausführungsform eines Schwächungselements 9 angedeutet.

In den Fig. 2, 3 ist ein weiteres Ausführungsbeispiel einer Trenneinrichtung 1 gezeigt. Fig. 2 zeigt das Trennelement 5 in einer Frontansicht, Fig. 3 zeigt das Trennelement 5 in einer seitlichen Ansicht. In dem Ausführungsbeispiel ist ein Schwächungselement 9 durch einen aus einem im Vergleich zu übrigen Trennelementabschnitten weniger stabilen bzw. weniger steifen Materialabschnitt ausgebildet. Konkret ist ein oberhalb des Trennabschnitts 6 liegender Trennelementabschnitt durch ein Destabilisierungs- bzw. Entsteifungselement in Form eines ziehharmonika- bzw. zick-zackförmig ausgebildeten Konstruktionselements gezielt destabilisiert bzw. entsteift. Das Schwächungselement 9 ist durch das ziehharmonika- bzw. zick-zackförmig ausgebildete Konstruktionselement ausgebildet.

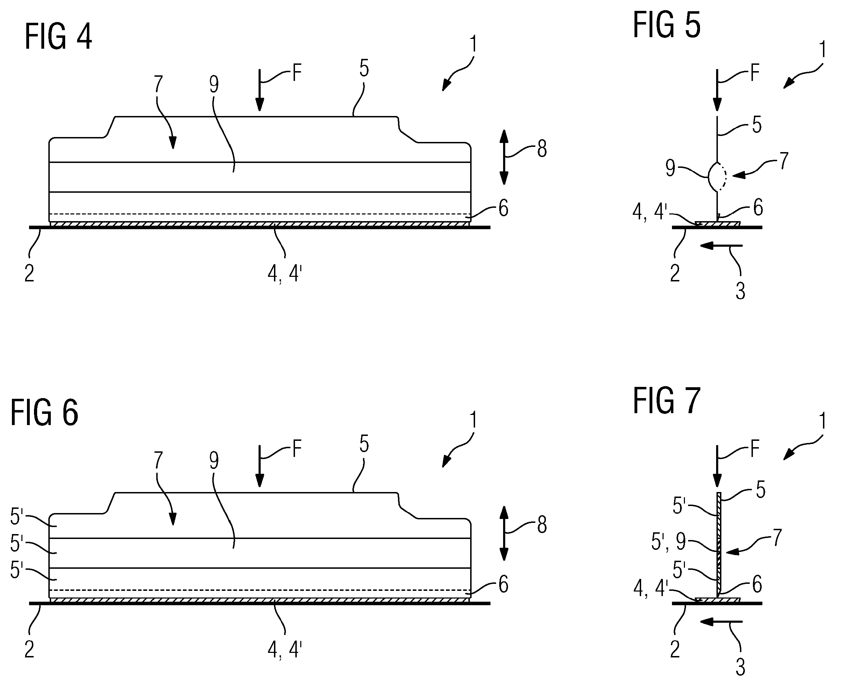

In den Fig. 4, 5 ist ein weiteres Ausführungsbeispiel einer Trenneinrichtung 1 gezeigt. Fig. 4 zeigt das Trennelement 5 in einer Frontansicht, Fig. 5 zeigt das Trennelement 5 in einer seitlichen Ansicht. In dem Ausführungsbeispiel ist ein Schwächungselement 9 ebenso durch einen aus einem im Vergleich zu übrigen Trennelementabschnitten weniger stabilen bzw. weniger steifen Materialabschnitt ausgebildet. Konkret ist ein oberhalb des Trennabschnitts 6 liegender Trennelementabschnitt durch ein Destabilisierungs- bzw. Entsteifungselement in Form eines durch eine einfache oder, wie strichliert dargestellt, mehrfache Ausbauchung ausgebildeten Konstruktionselements gezielt destabilisiert bzw. entsteift. Das Schwächungselement 9 ist durch das ein- oder mehrfach ausgebaucht ausgebildete Konstruktionselement ausgebildet.

In den Fig. 6, 7 ist ein weiteres Ausführungsbeispiel einer Trenneinrichtung 1 gezeigt. Fig. 6 zeigt das Trennelement 5 in einer Frontansicht, Fig. 7 zeigt das Trennelement 5 in einer seitlichen Ansicht. In dem Ausführungsbeispiel ist das Trennelement 5 mehrteilig, d. h. aus mehreren gesonderten Trennelementabschnitten 5', ausgebildet. Ein oberhalb des den Trennabschnitt 6 aufweisenden Trennelementabschnitts 5' angeordneter Trennelementabschnitt 5' ist aus einem im Vergleich weniger stabilen bzw. weniger steifen Material nämlich einem Elastomer- bzw. Gummimaterial ausgebildet. Das Schwächungselement 9 ist durch den aus dem im Vergleich weniger stabilen bzw. weniger steifen Material ausgebildeten Trennelementabschnitt 5' ausgebildet.

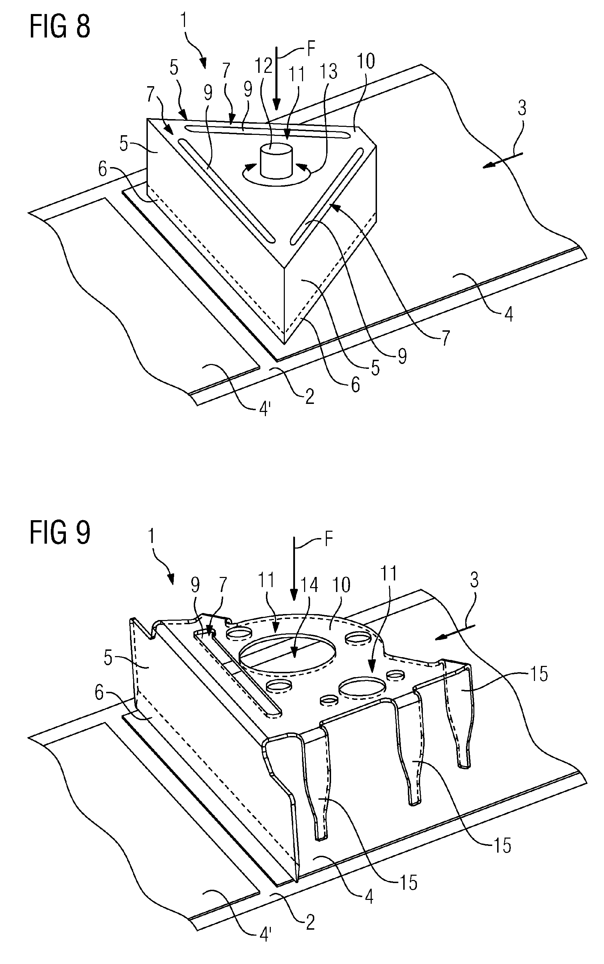

Fig. 8 zeigt ein weiteres Ausführungsbeispiel einer Trenneinrichtung 1 in einer perspektivischen Ansicht. Die in Fig. 8 gezeigte Trenneinrichtung 1 dient der Herstellung von (im Wesentlichen) dreieck- bzw. trapezförmigen Teigstrangelementen 4', welche zur Herstellung von gebogenen und gerollten Backwaren, d. h. z. B. Croissants, Hörnchen, etc., verwendet werden. Die Trenneinrichtung 1 umfasst mehrere Trennelemente 5 und ein plattenförmiges Montageelement 10 mit einer dreieckigen bzw. trapezförmigen Grundform. Die Trennelemente 5 sind im Bereich ihres dem Trennabschnitt 6 abgewandten freien Endes mit dem Montageelement 10 verbunden und entsprechend der Grundform des Montageelements 10 in bestimmten Winkeln relativ zueinander angeordnet. Benachbart angeordnete Trennelemente 5 können im Bereich ihrer Seitenflächen untereinander verbunden sein. Die Trennelemente 5 sind winklig, d. h. im Wesentlichen senkrecht, relativ zu dem Montageelement 10 verlaufend an dem Montageelement 10, d. h. als winklig, von dem Montageelement 10 abragende (vertikale) Schenkel ausgebildet.

Das Montageelement 10 dient der Montage der Trennelemente 5 an einem Anschlussbauteil bzw. einer Anschlussbauteilgruppe der Trenneinrichtung 1. An dem Montageelement 10 ist hierzu ein Montagemittel 11 beispielhaft in Form eines bolzenartigen Montageansatzes 12, welcher in eine hierzu korrespondierende Montagebohrung eingreifen kann, ausgebildet. Ein Montagemittel 11 könnte auch in Form einer Montagebohrung 14 (vgl. Fig. 9) ausgebildet sein. Bei einem Anschlussbauteil bzw. einer Anschlussbauteilgruppe kann es sich z. B. um eine entsprechende Antriebseinrichtung, welche dazu eingerichtet ist, eine auf die Trennelemente 5 wirkende Trennkraft zu erzeugen, handeln.

Durch den Doppelpfeil 13 ist angedeutet, dass das Montageelement 10 nebst den Trennelementen 5 um eine Drehachse drehbar gelagert ist. Die Drehachse verläuft parallel zu der Wirkachse bzw. Wirkrichtung der Trennkraft bzw. fällt mit dieser zusammen. Durch das Drehen des Montageelements 10 können unterschiedliche Schnitt- bzw. Trennmuster realisiert und die Produktivität der Trenneinrichtung 1 erhöht werden. Die drehbare Lagerung des Montageelements 10 ist über einen geeigneten Drehantrieb (nicht gezeigt) realisiert. Die Trennelemente 5 sind über das Montageelement 10 mit dem Drehantrieb gekoppelt. Der Drehantrieb kann in eine Antriebseinrichtung zur Beaufschlagung der Trennelemente 5 mit einer entsprechenden Trennkraft integriert sein oder umgekehrt.

In dem in Fig. 8 gezeigten Ausführungsbeispiel sind entsprechende Strukturelemente 7 in dem Montageelement 10 ausgebildet und somit unmittelbarer Bestandteil des Montageelements 10. Das über die Strukturelemente 7 gezielt vermittelbare bzw. vermittelte elastisch-federnde Verhalten ermöglicht eine besondere reversible und sonach rein elastische Verformbarkeit des Montageelements 10 bei Einwirkung einer bestimmten Trennkraft. Das Montageelement 10 wird bei Einwirkung der Trennkraft zumindest abschnittsweise reversibel elastisch verformt. Die Strukturelemente 7 beeinflussen das elastische Verformungsverhalten des Montageelements 10 zumindest abschnittsweise bzw. verleihen dem Montageelement 10 zumindest abschnittsweise ein bestimmtes elastisches Verformungsverhalten. Unter einer reversiblen Verformung des Montageelements 10 ist eine Biegung des Montagelements 10 um eine senkrecht zur Richtung der einwirkenden Trennkraft liegende Achse zu verstehen.

In dem in Fig. 8 gezeigten Ausführungsbeispiel sind die Strukturelemente 7 ebenso jeweils als ein eine Erniedrigung bzw. Schwächung der strukturellen Eigenschaften, insbesondere der mechanischen Stabilität bzw. Biegestabilität, des Montageelements 10 herbeiführendes Schwächungselement 9 ausgebildet. Die Schwächungselemente 9 sind durch lokale Materialreduzierungen des Montageelements 10 ausgebildet. Konkret sind die Schwächungselemente 9 durch länglich gestaltete Ausnehmungen bzw. Durchbrechungen bzw. Öffnungen in dem Montageelement 10 ausgebildet. Die Schwächungselemente 9 sind entsprechend als Langlöcher bzw. Schlitze ausgebildet. Die Längsachse eines jeweiligen Schwächungselements 9 erstreckt sich parallel zu einem Trennabschnitt 6 eines Trennelements 5. Hieraus ergibt sich eine Zuordnung eines Schwächungselements 9 zu einem Trennelement 5.

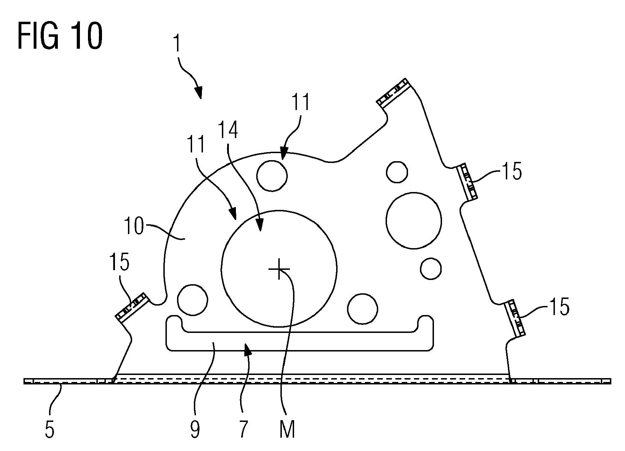

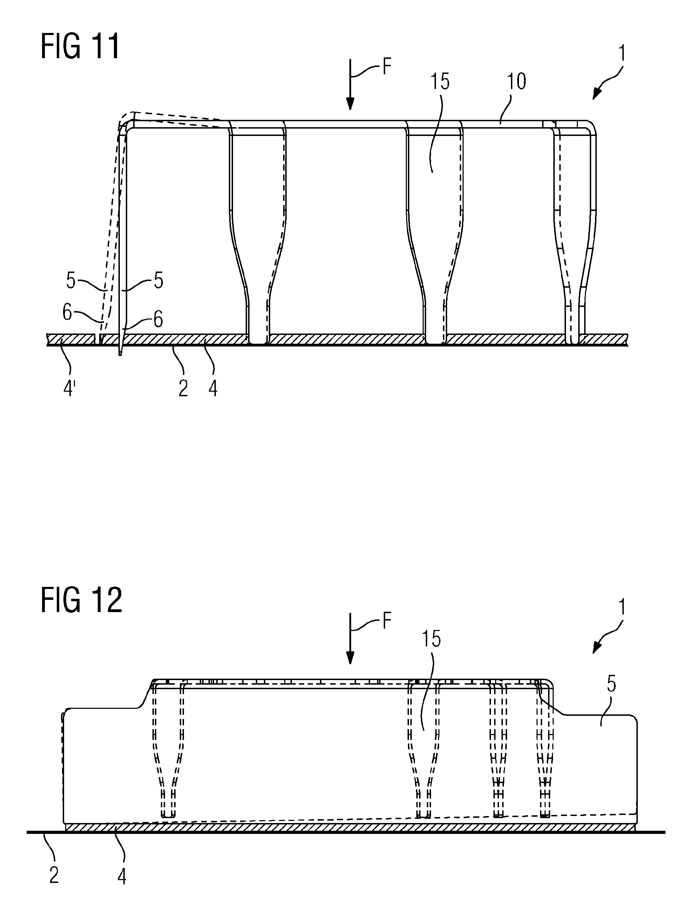

Die Fig. 9 - 12 zeigen ein weiteres Ausführungsbeispiel einer Trenneinrichtung 1. Fig. 9 zeigt die Trenneinrichtung 1 in einer perspektivischen Ansicht, Fig. 10 zeigt die Trenneinrichtung 1 in einer Aufsicht, Fig. 11 zeigt die Trenneinrichtung 1 in einer seitlichen Ansicht und Fig. 12 zeigt die Trenneinrichtung 1 in einer Frontansicht. Die Trenneinrichtung 1 umfasst ein (einziges) Trennelement 5 und ein plattenförmiges Montageelement 10. Das Trennelement 5 ist im Bereich seines dem Trennabschnitt 6 abgewandten freien Endes mit dem Montageelement 10 verbunden. Das Trennelement 5 ist winklig, d. h. im Wesentlichen senkrecht, relativ zu dem Montageelement 10 verlaufend an dem Montageelement 10, d. h. als winklig von dem Montageelement 10 abragender (vertikaler) Schenkel ausgebildet.

Das Montageelement 10 dient auch hier der Montage des Trennelements 5 an einem Anschlussbauteil bzw. einer Anschlussbauteilgruppe der Trenneinrichtung 1. An dem Montageelement 10 ist hierzu ein Montagemittel 11 in Form einer Montagebohrung 14, in welche ein hierzu korrespondierender, z. B. bolzenartiger, Montageansatz (nicht gezeigt) eingreifen kann, ausgebildet.

An bzw. in dem Montageelement 10 sind weitere Montagemittel 11 zur Montage unterschiedlicher Funktionskomponenten ausgebildet sein. Die weiteren Montagemittel 11 sind beispielhaft ebenso als Montagebohrungen ausgebildet.

An dem Montageelement 10 sind ferner mehrere Handhabungselemente 15 zum Handhaben, insbesondere zum zeitweisen Halten, eines aufzutrennenden Teigstrangs 4 in einer zahnreihen- bzw. zinnenartig benachbarten Anordnung ausgebildet. Die Handhabungselemente 15 sind als winklig, im Wesentlichen senkrecht, von dem Montageelement 10 abragende (vertikale) Schenkel ausgebildet. Das Handhaben bzw. Halten eines aufzutrennenden Teigstrangs 4 kann das Auftrennungsergebnis verbessern, da der Teigstrang 4 vor bzw. während eines Auftrennungsvorgangs in Position gehalten werden kann.

In dem in den Fig. 9 - 12 gezeigten Ausführungsbeispiel ist das Strukturelement 7 wiederum als ein eine Erniedrigung bzw. Schwächung der strukturellen Eigenschaften, insbesondere der mechanischen Stabilität bzw. Biegestabilität, des Montageelements 10 herbeiführendes Schwächungselement 9 ausgebildet. Das Schwächungselement 9 ist durch eine lokale Materialreduzierung des Montageelements 10 ausgebildet. Konkret handelt es sich bei dem Schwächungselement 9 wiederum um eine länglich gestaltete Ausnehmung bzw. Durchbrechung bzw. Öffnung in dem Montageelement 10. Das Schwächungselement 9 ist entsprechend als Langloch bzw. Schlitz ausgebildet. Die Längsachse des Schwächungselements 9 erstreckt sich parallel zu dem Trennabschnitt 6 des Trennelements 5.

In dem in den Fig. 9 - 12 gezeigten Ausführungsbeispiel weist das Montageelement 10 eine unsymmetrische Grundform auf (vgl. insbesondere die in Fig. 10 gezeigte Aufsicht). Das Montagemittel 11, vgl. die Montagebohrung 14, ist bezogen auf die gegebene Breite bzw. Länge des Trennelements 5 außermittig angeordnet bzw. ausgebildet. Der Mittelpunkt M der Montagebohrung 14 liegt sonach außermittig relativ zu dem Trennelement 5 versetzt. Hierdurch ergäbe sich bei Einwirkung einer entsprechenden Trennkraft ein unterschiedliches elastisch-federndes Verhalten des Trennelements 5 in jeweiligen Trennelementbereichen links und rechts des Montagemittels 11, insbesondere bedingt durch ein unterschiedlich steifes Verhalten des Trennelements 5 links und rechts der Montagebohrung 14 bei Einwirkung der Trennkraft; das Trennelement 5 würde bei Einwirkung einer entsprechenden Trennkraft in jeweiligen Trennelementbereichen links und rechts der Montagebohrung 14 unterschiedlich "reagieren". Die Anordnung bzw. Ausrichtung und die geometrischen Abmessungen des Strukturelements 7 sind im Hinblick auf diese Problematik festgelegt. Das Strukturelement 7 erstreckt sich sonach derart entlang des Montageelements 10, dass sich ein (weitgehend) konstanter Trennkraftverlauf entlang des Trennabschnitts 6 ergibt. Dies ist in dem in den Fig. 9 - 12 gezeigten Ausführungsbeispiel durch eine ebenso außermittige Anordnung bzw. Ausbildung des Strukturelements 7 bezogen auf die Breite bzw. Länge des Trennelements 6 realisiert; ebenso liegt der Mittelpunkt der Längsachse des Strukturelements 7 relativ zu dem Mittelpunkt M des Montageelements 14 versetzt. Mit anderen Worten sind die Anordnung bzw. Ausrichtung wie auch die geometrischen Abmessungen des Strukturelements 7 derart gewählt, um das auf die außermittige Anordnung bzw. Ausbildung der Montagebohrung 14 zurückzuführende unterschiedliche elastisch-federnde Verhalten des Trennelements 5 bei Einwirkung einer entsprechenden Trennkraft auszugleichen.

Das elastisch-federnde Verhalten des Montageelements 10 bzw. des Trennelements 5 wird auch über die (weiteren) Montagemittel 11 zur Montage unterschiedlicher Funktionskomponenten an dem Montageelement 10 sowie über die Handhabungselemente 15 in gewisser Weise beeinflusst. Die Anordnung bzw. Ausrichtung wie auch die geometrischen Abmessungen des Strukturelements 7 sind unter Berücksichtigung der durch entsprechende Montagemittel 11 bzw. Handhabungselemente 15 gegebenen Einflüsse auf das elastisch-federnde Verhalten des Montageelements 10 bzw. des Trennelements 5 festgelegt, sodass sich ein (weitgehend) konstanter Trennkraftverlauf entlang des Trennabschnitts 6 realisieren lässt.

In den Fig. 11, 12 ist die Beeinflussung des elastisch-federnden Verhaltens des Trennelements 5 durch das Strukturelement 7 bzw. das Schwächungselement 9 bei Einwirkung einer Trennkraft ersichtlich. Fig. 11 zeigt in strichlierter Darstellung die Verformung des Montageelements 10 und die damit einhergehende Auslenkung des Trennelements 5 bei Einwirkung der Trennkraft im Vergleich zu einem nicht strichliert dargestellten Ausgangszustand, in welchem die Trennkraft nicht wirkt. Fig. 12 zeigt in strichlierter Darstellung eine entsprechende Auslenkung des Trennelements 5 bei Einwirkung der Trennkraft bei einer Abweichung der Anordnung bzw. Ausrichtung des Trennelements 5 von einer Soll-Anordnung bzw. Soll-Ausrichtung relativ zu einer einen aufzutrennenden Teigstrang 4 fördernden Fördereinrichtung 2. Die Nachgiebigkeit des Trennelements 5 entlang des Trennabschnitts 6 ist durch das Strukturelement 7 ermöglicht, sodass Abweichungen durch entsprechende Form- und Ausrichtetoleranzen zu geringen Veränderungen des Kraftverlaufs an dem Trennabschnitt 6 führen.

In allen Varianten entsprechender Schwächungselemente 9 wird das elastisch-federnde Verhalten der Trennelemente 5 bzw. der Montageelemente 10 gezielt beeinflusst; die Trennelemente 5 bzw. die Montageelemente 10 sind bei Einwirkung einer entsprechenden Trennkraft lokal biegsam(er) bzw. nachgiebig(er) bzw. elastisch verformbar(er).

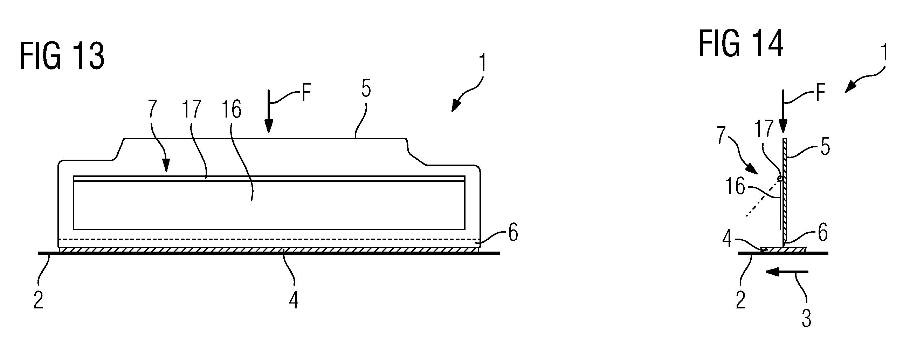

In den Fig. 13, 14 ist ein weiteres Ausführungsbeispiel einer Trenneinrichtung 1 gezeigt. Fig. 13 zeigt das Trennelement 5 in einer Frontansicht, Fig. 14 zeigt das Trennelement 5 in einer seitlichen Ansicht. Anhand des in den Fig. 13, 14 gezeigten Ausführungsbeispiels ist ersichtlich, dass ein Strukturelement 7 auch eingerichtet sein kann, gezielt eine abschnittsweise Erhöhung der mechanischen Stabilität und somit eine abschnittsweise Erniedrigung des elastisch-federnden Verhaltens, d. h. eine zumindest abschnittsweise Erhöhung der Steifigkeit bzw. eine zumindest abschnittsweise Erniedrigung der Nachgiebigkeit, im Hinblick auf eine im Betrieb der Trenneinrichtung 1 einwirkende Trennkraft herbeizuführen. Dies ist zweckmäßig, wenn ein Trennelement 5 ursprünglich eine zu geringe mechanische Stabilität bzw. zu hohe elastisch-federnde Eigenschaften im Hinblick auf eine einwirkende Trennkraft aufweist, d. h. wenn ein Trennelement 5 ursprünglich zu wenig steif bzw. zu nachgiebig ist.

In diesem Fall ist ein Strukturelement 7 als ein eine Erhöhung bzw. Stärkung der strukturellen Eigenschaften, insbesondere der mechanischen Stabilität bzw. Biegestabilität, eines Trennelements 5 und/oder eines entsprechenden Montageelements 10 herbeiführendes Verstärkungselement 16 ausgebildet. In dem in den Fig. 13, 14 gezeigten Ausführungsbeispiel ist das Verstärkungselement 16 durch eine an dem Trennelement 5 lokal befestigte Verstärkungsstruktur in Form einer stabilen bzw. steifen Verstärkungsplatte ausgebildet. Die Verstärkungsstruktur erstreckt sich über einen lokal zu stabilisierenden bzw. zu versteifenden Bereich des Trennelements 5.

Anhand von Fig. 14 ist ersichtlich, dass die Verstärkungsstruktur relativ zu dem Trennelement 5 bewegbar an dem Trennelement 5 gelagert sein kann, sodass die Verstärkungsstruktur gezielt über einen lokal zu stabilisierenden bzw. versteifenden Bereich des Trennelements 5 bewegbar ist, um diesen Bereich bedarfsweise gezielt zu stabilisieren bzw. zu versteifen. In dem in den Fig. 13, 14 gezeigten Ausführungsbeispiel handelt es sich bei der Bewegung der Verstärkungsstruktur beispielhaft um eine Schwenkbewegung. Die bewegbare Lagerung der Verstärkungsstruktur ist über eine an dem Trennelement 5 angeordnete oder ausgebildete, z. B. gelenkartige Führungsmittel aufweisende, Führungseinrichtung 17 realisiert. Selbstverständlich kann die von dem Trennelement 5 weggeschwenkte Verstärkungsstruktur über geeignete Haltemittel (nicht gezeigt) in der von dem Trennelement 5 weg geschwenkten Position gehalten werden.

Für alle Ausführungsbeispiele gilt, dass die Trenneinrichtung 1 insgesamt bewegbar relativ zu einer einen aufzutrennenden Teigstrang 4 fördernden Fördereinrichtung 2 gelagert sein. Die Trenneinrichtung 1 kann im Rahmen eines vorzunehmenden Trennvorgangs in eine definierte Ausrichtung bzw. Position relativ zu der Fördereinrichtung 2 respektive relativ zu einem auf der Fördereinrichtung 2 befindlichen Teigstrang 4 bewegt werden.

Ist das Trennelement 5 mit einem Montageelement 10 verbunden und ein Strukturelement 7 an oder in dem Montageelement 10 angeordnet oder ausgebildet, tritt bei einer in eine entsprechende definierte Ausrichtung bzw. Position relativ zu einer Fördereinrichtung 2 bewegten Trenneinrichtung 1 eine Verformung des Montageelements 10 auf, welche in Verbindung mit dessen mechanischen Eigenschaften, insbesondere dessen Steifigkeit, zu der Ausbildung einer Trennkraft bzw. eines konstanten Trennkraftverlaufs entlang des Trennabschnitts 6 führt.

Für alle Ausführungsbeispiele gilt, dass die Trennelemente 5 und/oder die Montageelemente 10 zumindest abschnittsweise, insbesondere vollständig, aus einem elastisch-federnden bzw. nachgiebigen Werkstoff, d. h. insbesondere einem elastisch-federnden bzw. nachgiebigen metallischen Werkstoff, z. B. einem Leichtmetall, z. B. Aluminium, bzw. einer Leichtmetalllegierung oder einem Edel- oder Federstahl, ausgebildet sein können. Entsprechende elastisch-federnde metallische Werkstoffe können zur Realisierung eines besonderen elastisch-federnden Verhaltens eine bestimmte (innere) mechanische Vorspannung aufweisen.

Mit den in den Fig. gezeigten Trenneinrichtungen 1 lässt sich ein Verfahren zur Auftrennung wenigstens eines, insbesondere bandförmigen, Teigstrangs 4 in einzelne Teigstrangelemente 4' realisieren.

### BEZUGSZEICHENLISTE

- 1: Trenneinrichtung
- 2: Fördereinrichtung
- 3: Pfeil
- 4: Teigstrang
- 4': Teigstrangelement
- 5: Trennelement
- 5': Trennelementabschnitt
- 6: Trennabschnitt
- 7: Strukturelement
- 8: Doppelpfeil
- 9: Schwächungselement
- 10: Montageelement
- 11: Montagemittel
- 12: Montageansatz
- 13: Doppelpfeil
- 14: Montagebohrung
- 15: Handhabungselement
- 16: Verstärkungselement
- 17: Führungseinrichtung

- M: Mittelpunkt (Montagebohrung)

## Patentansprüche

1. Trenneinrichtung (1) zur Auftrennung wenigstens eines, insbesondere bandförmigen, Teigstrangs (4) in einzelne Teigstrangelemente (4'), umfassend wenigstens ein Trennelement (5) mit wenigstens einem, insbesondere schneidenförmigen, Trennabschnitt (6), **gekennzeichnet durch** wenigstens ein Strukturelement (7), welches zur gezielten Beeinflussung des elastisch-federnden Verhaltens, insbesondere des elastisch-federnden Rückstellverhaltens, des Trennelements (5) bei einer auf das Trennelement (5) einwirkenden Trennkraft eingerichtet ist.

2. Trenneinrichtung nach Anspruch 1, **dadurch gekennzeichnet, dass** das wenigstens eine Strukturelement (7) zur Ausbildung eines konstanten Trennkraftverlaufs entlang des wenigstens einen Trennabschnitts (6) des wenigstens einen Trennelements (5) eingerichtet ist.

3. Trenneinrichtung nach Anspruch 1 oder 2, **dadurch gekennzeichnet, dass** das wenigstens eine Strukturelement (7) oder wenigstens ein Strukturelement (7) an oder in einem Trennelement (5) angeordnet oder ausgebildet ist.

4. Trenneinrichtung nach einem der vorhergehenden Ansprüche, **dadurch gekennzeichnet, dass** das wenigstens eine Strukturelement (7) oder wenigstens
ein Strukturelement (7) an oder in einen mit einem Trennelement (5), insbesondere einstückig, verbundenen Montageelement (10) angeordnet oder ausgebildet ist, wobei das Montageelement (10) insbesondere zur Montage des Trennelements (5) an einem Anschlussbauteil oder einer Anschlussbauteilgruppe der Trenneinrichtung (1) eingerichtet ist.

5. Trenneinrichtung nach Anspruch 4, **dadurch gekennzeichnet, dass** das Trennelement (5) winklig, insbesondere senkrecht, relativ zu dem Montageelement (10) verlaufend an diesem angeordnet oder ausgebildet ist.

6. Trenneinrichtung nach einem der vorhergehenden Ansprüche, **dadurch gekennzeichnet, dass** wenigstens ein Strukturelement (7) als ein eine Schwächung der strukturellen Eigenschaften, insbesondere der mechanischen Stabilität, eines Trennelements (5) und/oder eines Montageelements (10), insbesondere zur Montage des Trennelements (5) an einem Anschlussbauteil oder einer Anschlussbauteilgruppe der Trenneinrichtung (1), herbeiführendes Schwächungselement (9) ausgebildet ist oder wenigstens ein solches umfasst.

7. Trenneinrichtung nach Anspruch 6, **dadurch gekennzeichnet, dass** ein Schwächungselement (9) durch eine lokale Wandstärkenreduzierung des Trennelements (5) oder des Montageelements (10) ausgebildet ist oder
ein Schwächungselement (9) durch einen aus einem im Vergleich zu übrigen Trennelementabschnitten oder Montageelementabschnitten mechanisch weniger stabilen, insbesondere weniger steifen, Materialabschnitt ausgebildeten Trennelementabschnitt oder Montageelementabschnitt ausgebildet ist oder
ein Schwächungselement (9) durch eine Ausnehmung in dem Trennelement (5) oder in dem Montageelement (10) ausgebildet ist.

8. Trenneinrichtung nach einem der vorhergehenden Ansprüche, **dadurch gekennzeichnet, dass** wenigstens ein Strukturelement (7) als ein eine Stärkung der strukturellen Eigenschaften, insbesondere der mechanischen Stabilität, eines Trennelements (5) und/oder eines Montageelements (10), insbesondere zur Montage eines Trennelements (5) an einem Anschlussbauteil oder einer Anschlussbauteilgruppe der Trenneinrichtung (1), herbeiführendes Verstärkungselement (16) ausgebildet ist oder wenigstens ein solches umfasst.

9. Trenneinrichtung nach Anspruch 8, **dadurch gekennzeichnet, dass** ein Verstärkungselement (16) durch eine lokale Wandstärkenerhöhung des Trennelements (5) oder des Montageelements (10) ausgebildet ist oder
ein Verstärkungselement (16) durch einen aus einem im Vergleich zu übrigen Trennelementabschnitten oder Montageelementabschnitten mechanisch stabileren, insbesondere steiferen, Materialabschnitt ausgebildeten Trennelementabschnitt bzw. Montageelementabschnitt ausgebildet ist oder
ein Verstärkungselement (16) durch wenigstens eine an dem Trennelement (5) oder dem Montageelement (10) lokal befestigte Verstärkungsstruktur (ausgebildet ist.

10. Trenneinrichtung nach Anspruch 9, **dadurch gekennzeichnet, dass** ein Verstärkungselement (16) durch wenigstens eine an dem Trennelement (5) oder dem Montageelement (10) lokal befestigte Verstärkungsstruktur ausgebildet ist, wobei die wenigstens eine Verstärkungsstruktur relativ zu dem Trennelement (5) oder dem Montageelement (10) bewegbar an dem Trennelement (5) oder dem Montageelement (10) gelagert ist.

11. Trenneinrichtung nach einem der vorhergehenden Ansprüche, **dadurch gekennzeichnet, dass** ein Trennelement (5) und/oder ein Montageelement (10), insbesondere zur Montage eines Trennelements (5) an einem Anschlussbauteil oder einer Anschlussbauteilgruppe der Trenneinrichtung (1), aus einem elastisch-federnden Werkstoff, insbesondere einem elastisch-federnden metallischen Werkstoff, bevorzugt einem Federstahl, ausgebildet ist.

12. Trenneinrichtung nach einem der vorhergehenden Ansprüche, **gekennzeichnet durch** wenigstens ein Handhabungselement (15) zum Handhaben eines zu vereinzelnden Teigstrangs (4) oder eines vereinzelten Teigstrangelements (4').

13. Trenneinrichtung nach einem der vorhergehenden Ansprüche, **dadurch gekennzeichnet, dass** ein Trennelement (5) um eine zu der Wirkachse bzw. Wirkrichtung einer auf dieses einwirkenden Trennkraft parallelen Drehachse drehbar gelagert ist.

14. Vorrichtung zur Be- oder Verarbeitung von, insbesondere bandförmigen, Teigsträngen (4), umfassend wenigstens eine Trenneinrichtung (1) zur Auftrennung wenigstens eines, insbesondere bandförmigen, Teigstrangs (4) in einzelne Teigstrangelemente (4') nach einem der vorhergehenden Ansprüche.

15. Verfahren zur Auftrennung wenigstens eines, insbesondere bandförmigen, Teigstrangs (4) in einzelne Teigstrangelemente (4'), wobei zur Auftrennung wenigstens eines, insbesondere bandförmigen, Teigstrangs (4) in einzelne Teigstrangelemente (4'), eine Trenneinrichtung (1) nach einem der Ansprüche 1 bis 14 verwendet wird.
